Europäisches Patentamt

European Patent Office

Office européen des brevets

(11) Publication number **0 139 853**
A2

## (12) EUROPEAN PATENT APPLICATION

(21) Application number: **84107771.2**

(22) Date of filing: **04.07.84**

(51) Int. Cl.⁴: **A 47 J 37/07**

(30) Priority: **28.10.83 US 546583**

(43) Date of publication of application:
**08.05.85 Bulletin 85/19**

(84) Designated Contracting States:
**AT BE CH DE FR GB IT LI LU NL SE**

(71) Applicant: **Kelz, Reinhard**
**34 Dunkeld Way**
**Thornhill Ontario L3T 4X9(CA)**

(72) Inventor: **Kelz, Reinhard**
**34 Dunkeld Way**
**Thornhill Ontario L3T 4X9(CA)**

(74) Representative: **Patentanwälte Kirschner & Grosse**
**Herzog-Wilhelm-Strasse 17**
**D-8000 München 2(DE)**

(54) **Portable cooking apparatus.**

(57) A cooking utensil intended for outdoor cooking is formed by two wok-shaped metal dishes (12,52). A long upwardly extending handle is releasably secured to the centre of an upwardly facing cooking surface of the first metal dish and three detachable tripod legs (28) are releasably secured to the underside of the metal dish (12) supporting it over the second dish (52) which contains a cooking fire and is in turn supported on the ground by detachable tripod legs (44).

EP 0 139 853 A2

.../...

Croydon Printing Company Ltd.

FIG. 1

PATENTANWÄLTE

KLAUS D. KIRSCHNER          WOLFGANG GROSSE
DIPL.-PHYSIKER                    DIPL.-INGENIEUR

– /–

ZUGELASSENE VERTRETER VOR DEM
EUROPAISCHEN PATENTAMT

HERZOG-WILHELM-STR. 17
D-8 MÜNCHEN 2

0139853

Reinhard Kelz
Thornhill, Ontario
Canada

IHR ZEICHEN:
YOUR REFERENCE:

UNSER ZEICHEN:   R 5396 Gs/hs
OUR REFERENCE:

DATUM: July 4, 1984

## PORTABLE COOKING APPARATUS

This invention relates to cooking utensils and is useful
in particular, but not exclusively, for cooking utensils
intended for use on an open fire.

One of the disadvantages of barbeques, which are in widespread use for open-air cooking, is that they require
special barbeque briquettes, which are relatively expensive and which are dirty to handle.  Barbeques are also
bulky and heavy and, therefore, are awkward to transport.

One alternative to the use of a barbeque and barbeque
briquettes is the employment of a grill on a fire built
on the ground, the fire being fueled with wood or other
combustible material and the grill being supported on
rocks or any other convenient support.

However, the use of a grill restricts the manner in which
food can be cooked, since obviously food cannot be fried
or boiled directly on a grill, i.e. without the use of a
pan or other receptacle.  Also, the food can be adversely
affected by the fumes from the burning fuel, and the
ground conditions may not be suitable for building a fire.
Moreover, a fire built on the ground usually requires
cooking operations to be carried out at an inconveniently
low level whilst the cook kneels or sits on the ground.

This is particularly inconvenient when the ground is wet
or muddy, or covered with hostile vegetation or ice or
snow.

According to the invention, there is provided a cooking
utensil comprising a first metal dish having an upper
cooking surface of upwardly concave shape,  support means
beneath the underside of the first metal dish for supporting it in a cooking position above a fire, and a
handle connected to the first metal dish in a position
in which said handle extends substantially vertically
upwardly above the centre of said cooking surface of a
sufficient distance to provide a relatively cool handle
surface during normal cooking for removing said dish
from its cooking position characterized in that the utensil further includes a second metal dish (52) having an
upper surface (40) of upwardly concave shape for supporting a fire and receiving said support means (28), and
further support means (44) for supporting the underside
of the second metal dish above a supporting surface.

The support means preferably comprise three equi-spaced
tripod legs at the underside of each metal dish, which
legs are preferably readily detachable from the underside
of the metal dish to facilitate transportation and storage of the utensil in a compact space.

With this utensil, there is no necessity to use special
fuel such as barbeque briquettes, and fuel can often
easily be obtained, for example, by picking up wood in
the vicinity of a picnic site.

The food being cooked is shielded from the fumes resulting from the combustion of the fuel by the dish and the
food can by cooked, for example, by frying or boiling.
The two tier structure of the device means that cooking
can take place a convenient distance above the ground.

One prior art, and indeed ancient, cooking utensil which
has found increasing and widespread acceptance in recent
years in Western countries is the Chinese wok, which
comprises a metal dish having an upwardly-facing, concave
cooking surface and, in many cases, a pair of metal
handles riveted to opposite sides of the dish. One disadvantage of the wok is that it is usually necessary to
grip both of the handles, i.e. to use two hands, in order
to move the wok when the wok contains food. If this is
done while the wok is being used on an open fire, it is
easy for the user of the wok to hurt his hands, since
the handles become hot and are often located directly
above underlying charcoal or wood embers and flames.

The present embodiments of the utensil can avoid these
problems by having a handle and means for connecting the
handle to the metal dish in a position in which the
handle extends vertically upwardly above the centre of
the cooking surface.

When the utensil is used on an open fire, the handle is
shielded from the flames of the fire, and from a substantial amount of the heat of the fire, by the metal dish,
and the upper end of the handle, which is preferably
spaced a substantial distance from the cooking surface,
can be gripped to remove the metal dish from the fire or
to adjust the position of the metal dish on the fire.

A second upwardly concave dish is provided which may be
used for building the fire. This retains the advantages
of the earlier described embodiment of the utensil, and
in addition provides a surface off of the ground for
building a fire. Such a surface may be needed in some
locations such as a patio or parking lot.

In preferred embodiments of the invention, the handle
comprises a shaft in readily releasable threaded engagement with a retainer which is fixed at the centre of the cooking surface of the first dish. Consequently, the handle can be easily removed from the dish to reduce the bulk of the utensil and, thus, to facilitate storage and transportation of the utensil.

Similarly, the legs, in the preferred embodiments, readily releasably detach from threaded engagement with the undersurface of the dish to reduce the bulk of the utensil, and the first and second dishes nest one inside the other.

The invention will be more readily understood from the following detailed description of a preferred embodiment thereof illustrated by way of example, in the accompanying drawings, in which:

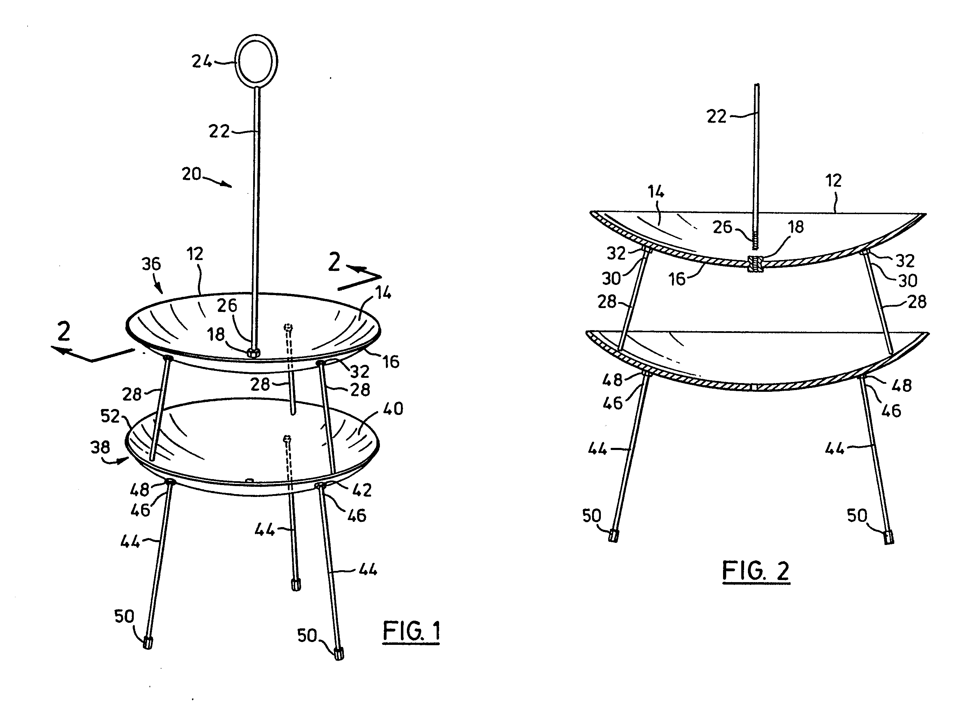

Figure 1 shows a view in perspective of a cooking utensil;

Figure 2 shows a view taken in cross-section along the line 2-2 of Figure 1.

The cooking utensil illustrated in the accompanying drawings has an upper portion 36 comprising a first wok-shaped metal dish 12 having an upwardly facing, concave cooking surface 14 and an underside 16.

A handle retainer 18 is fixed at the centre of the cooking surface 14 and, in the present embodiment of the invention, is in the form of a bushing or nut welded to the cooking surface 14.

A handle indicated generally by reference numeral 20 comprises a shaft in the form of a metal rod 22 and a grip in the form of a metal ring 24 welded to the upper end of the shaft 22 or any other convenient form of handle. The lower end of the shaft 22 is formed with a thread 26 for threaded engagement with the nut 18 welded or riveted to the bowl 12.

Three legs are equi-angularly spaced apart around the centre of the metal dish beneath the metal dish, the legs 28 each comprising a metal rod having a threaded upper end 30 in threaded engagement with a respective leg retainer in the form of a nut 32 welded to the metal dish underside 12 or the legs can be affixed by means of a spigot or socket joint without a nut.

When the utensil is in use, the legs 28 serve to support the metal dish 12 in a cooking position, for example above the burning fuel of an open fire built on a lower portion 38 of the utensil as described further below, and the dish can then be used, for example, for frying or boiling food. The food is shielded from fumes of the fire by the metal dish 12 and the tripod formed by the three legs 28 provide a stable support. When it is desired to remove the dish from the fire, the metal ring 24 can be gripped by hand to enable the cooking utensil 10 to be lifted and moved. This metal ring 24 is shielded from the heat of the fire by the metal dish 12 and, since the handle 20 extends vertically upwardly from the centre of the metal dish, the cooking utensil 10 can be easily lifted and moved using only one hand.

When the cooking utensil 10 is to be stored and/or transported, the handle rod 22 can be unscrewed from the nut 18 and the legs 28 can be unscrewed from the nuts 32, to reduce the bulk of the cooking utensil and the risk of damage to the handle and the legs.

The cooking utensil so far described is not restricted to use on the lower portion 28, but can be used, for example, on a fire built on the ground or even over a barbeque. Also, the portion 36 can be used, indoors or outdoors, on a camping stove or a conventional domestic stove, and by removing the legs 28, and also by removing the handle 20, if required, the dish 12 can be utilized in the manner of a conventional wok with a ring stand.

Instead of providing the nut 26 for anchoring the handle, a handle retainer in the form, for example, of a stem upstanding from the centre of the dish to about the level of the rim of the dish and formed at its upper end with a threaded socket for engaging the lower end of the handle could be employed to avoid contamination by grease and food in the vicinity of the cooking surface.

The lower portion 38 comprises a second metal dish 52. This second dish is preferably of the same configuration and dimensions as the first dish 12 for ease of manufacture, so that only one part will be needed and the tooling to manufacture both dishes will be the same. Obviously, a second metal dish 52 of different dimensions could be used, if this advantage were to be foregone.

The second metal dish 52 has an upwardly facing concave surface 40 and an underside 42. Three legs 44 are equiangularly spaced apart around the centre of the metal dish beneath the metal dish. As in the portion 36, the legs each comprise a metal rod having a threaded upper end 46 in threaded engagement with a respective leg retainer in the form of a nut 48 welded to the underside 42 or the legs can be affixed by means of a spigot and socket joint without a nut.

Thus far the legs 44 and their attachments to the dish are substantially identical to the legs 28 and their attachment. Preferably however the legs 44 are each formed at their lower ends with a foot, typically in the form of a nut 50 fixedly secured by welding and threaded engagement with the lower end of the respective leg 44. Obviously other suitable feet could be used. It may be desirable to make the legs 44 somewhat larger than the legs 28, both to raise the dish 12 to a convenient height, and to avoid their becoming confused with the legs 28 during assembly of the unit.

In use, the lower portion 38 is placed on the ground or other suitable location.  Its tripod logs 44 will provide a stable support even on uneven ground.  A fire is then built on the surface 40 of dish 52.  The dish 52 may have a central air admission hole in its base, corresponding to a hole provided in the upper dish 12 for attachment of the nut 18.  The upper portion 36 is then placed on the upper surface 40 of dish 52 by resting legs 28 on this surface, the tripod legs again providing stable, wobble-free support when their lower ends contact the upper surface 40 of dish  52 within its rim and rest securely thereon.

Dish 12 is removed if necessary from the surface 40 of dish 52 to control the rate of cooking, or to serve its contents.

CLAIMS:

1. A cooking utensil comprising a first metal dish having an upper cooking surface of upwardly concave shape, support means beneath the underside of the first metal dish for supporting it in a cooking position above a fire, and a handle connected to the first metal dish in a position in which said handle extends substantially vertically upwardly above the centre of said cooking surface of a sufficient distance to provide a relatively cool handle surface during normal cooking for removing said dish from its cooking position, characterized in that the utensil further includes a second metal dish (52) having an upper surface (40) of upwardly concave shape for supporting a fire and receiving said support means (28), and further support means (44) for supporting the underside of the second metal dish above a supporting surface.

2. A cooking utensil as claimed in Claim 1, characterized in that the support means for both the first and the second metal dishes (12, 52) comprise at least three equi-spaced tripod legs (28,44) for each of said dishes at the underside of said dishes.

3. A cooking utensil as claimed in Claim 1 or 2, characterized in that the second metal dish (52) has a configuration and dimensions substantially identical to those of the first dish (12).

4. A cooking utensil as claimed in Claim 2, characterized in that means (32, 48) are provided for releasably securing the legs (28,44) to the undersides of both said first and second dishes (12, 52).

5. A cooking utensil as claimed in Claim 2 or 4, characterized in that the legs (44) supporting the second metal dish are longer than the legs supporting the first metal dish.

0139853

6. A cooking utensil as claimed in Claim 2, 4 or 5, characterized in that the legs 28 are dimensioned so as to support the first metal dish (12) at a suitable cooking height above a fire in the second metal dish (52) when resting on the upper surface (40) of the second dish (52) within its outer rim.

FIG. 1

FIG. 2

0139853